(19) Europäisches Patentamt
European Patent Office
Office européen des brevets

(11) Veröffentlichungsnummer: **0 237 911**
**B1**

(12) # EUROPÄISCHE PATENTSCHRIFT

(45) Veröffentlichungstag der Patentschrift: **21.06.89**

(51) Int. Cl.[4]: **C 09 B 29/26,** C 09 B 27/00, D 06 P 3/54

(21) Anmeldenummer: **87103382.5**

(22) Anmeldetag: **10.03.87**

(54) **Azoverbindungen.**

(30) Priorität: **20.03.86 DE 3609343**

(43) Veröffentlichungstag der Anmeldung: **23.09.87 Patentblatt 87/39**

(45) Bekanntmachung des Hinweises auf die Patenterteilung: **21.06.89 Patentblatt 89/25**

(84) Benannte Vertragsstaaten: **CH DE FR GB LI**

(56) Entgegenhaltungen:
**FR-A-879 986**
**NL-A-95 223**
**NL-A-97 423**
**US-A-3 287 358**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Leverenz, Klaus, Dr., Heymannstrasse 44, D-5090 Leverkusen (DE)**

EP 0 237 911 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Gegenstand der Erfindung sind nichtionogene Azoverbindungen der Formel

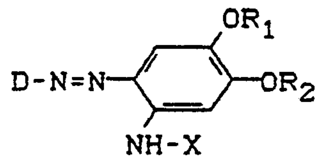

(I)

worin

D für den Rest einer Diazokomponente der Formeln

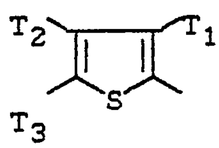 , 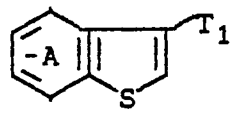 , 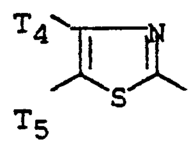 ,

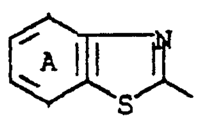 , 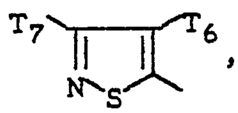 , 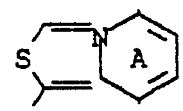

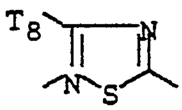 , 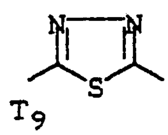 , 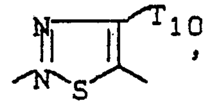 ,

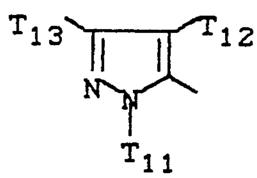 , 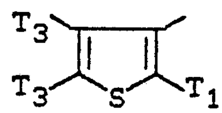 oder 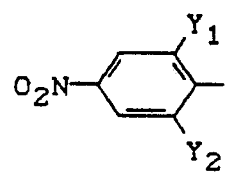

steht, in welchen

| | |
|---|---|
| X | einen Acylrest der Formeln $-COR_1$, $-COOR_1$, $-CONH_2$, $-CONHR_1$, $-CONR_1R_2$, $-COH$ und $-COR_3$ bedeutet, |
| $Y_1$ | F, Cl, Br, J, $NO_2$, CN oder $OR_1$, |
| $Y_2$ | $Y_1$ oder $CF_3$, $SO_2R'_1$, $CO_2R_1$, $COR_1$ oder $OR_1$, |
| $R_1$ und $R_2$ | einen Alkyl- oder Aralkylrest oder - gemeinsam eine Alkylengruppe |
| $R_3$ | einen Arylrest, |
| $T_1$ | = $NO_2$, CN oder $COOR_1$, |
| $T_2$ | = H oder $CH_3$, |
| $T_3$ | = $NO_2$, CN, $COOR_1$, $COR_1$, $COR_3$, $SO_2R_1$, $SO_2R_3$ oder Phenylazo, |
| $T_2 + T_3$ | = $-CH_2CH_2CH_2CH_2-$ oder $-CH_2CH_2CH_2-$, |
| $T_4$ | = H, $CH_3$ oder Phenyl, |
| $T_5$ | = $NO_2$, $COOR_1$, CN oder Phenylazo, |
| $T_6$ | = Br, $NO_2$ oder CN, |
| $T_7$ | = H, $R_1$, $R_3$ oder $SO_2R_1/R_3$, |
| $T_8$ | = Cl, Br, CN, Phenyl, $CH_3$ oder $SR_1$, |
| $T_9$ | = Cl, Br, $CF_3$, $SO_2R_1/R_3$ oder $SR_1$, |
| $T_{10}$ | = H, $R_1$, $R_3$, Cl, Br oder $COOR_1$, |
| $T_{11}$ | = H oder $R_1$, |
| $T_{12}$ | = $NO_2$, CN, Cl, Br, $COOR_1$ und |
| $T_{13}$ | = H, CN oder $R_1$, |

bedeuten, wobei die obengenannten Alkylreste solche mit 1 - 6 C-Atomen, die gegebenenfalls durch OH oder $C_1$-$C_4$-Alkoxy substituiert sein können, die Arylreste Phenylreste, die durch $CF_3$, Halogen, $C_1$-$C_4$-Alkyl oder $C_1$-$C_4$-Alkoxy substituiert sein können, die Aralkylreste Phenyl-$C_1$-$C_3$-alkylreste, die wie vorstehend im Phenylrest

substituiert sein können, und die Alkylengruppen $-CH_2-$ oder $CH_2CH_2-$ sind.

Vorzugsweise stehen $R_1$ und $R_2$ für $C_1$-$C_4$-Alkyl.

Die neuen Azoverbindungen werden in üblicher Weise durch

a) Diazotierung von Aminen der Formel

$D-NH_2$ (II)

und Kupplung auf Verbindungen der Formel

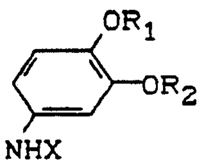

(III)

oder

b) oxidative Kupplung von Hydrazinen der Formel

$D-NH-NH_2$ (IV)

auf Verbindungen der Formel (V) erhalten.

Die Verbindungen der Formeln II - IV sind bekannt bzw. nach bekannten Methoden erhältlich.

Die jenigen Farbstoffe der Formel I, worin $Y_1$ und/oder $Y_2$ für CN, $SO_2R'_1$ oder $NO_2$ stehen, können vorteilhafterweise auch durch ebenfalls literaturbekannte Austauschreaktionen an entsprechenden o,(o'-Di)-halogenazoverbindungen hergestellt werden.

Die neuen Azoverbindungen sind Farbstoffe sowie Zwischenprodukte zur Herstellung von Farbstoffen, Beispielsweise lassen sich die Verbindungen der Formel I durch Umsetzung mit Aminen in die entsprechenden p-Aminobenzole umwandeln, die z. T. bekannte wertvolle Textilfarbstoffe sind.

Werden die Azoverbindungen der Formel I als Farbstoffe beispielsweise zum Färben und Bedrucken von Polyesterfasermaterialien eingesetzt, so erfolgt dies nach konventionellen wäßrigen und nicht-wäßrigen Methoden aus langer oder kurzer Flotte bzw. durch Anwendung üblicher Druckpasten oder aber nach dem ebenfalls bekannten Transferdruckprinzip.

Darüberhinaus sind einige Typen zum Spinn- und Massefärben von Polymeren geeignet.

Die neuen Azoverbindungen vom Typ Azobenzol unterscheiden sich von ähnlichen Farbstoffen gemäß FR-A-879 986 entweder durch die Anwesenheit von mindestens 3 Substuenten in der Diazokomponente oder durch eine andere Position der charakteristischen Acetylaminogruppe.

Die in den nachfolgenden Beispielen angegebenen $\lambda_{max}$-Werte wurden in DMF gemessen.

**Beispiel 1**

Zu der durch Erwärmen hergestellten Lösung von 19,5 g 3-Amino-5-nitrobenzisothiazol-(2,1) in 48 ml Schwefelsäure (96 %) und 17 ml o-Phosphorsäure (85 %) werden unter äußerer Kühlung bei 0 - 4°C 18 ml Nitrosylschwefelsäure getropft. Anschließend wird 3 Stunden bei der gleichen Temperatur nachgerührt. Die dabei erhaltene Diazoniumsalzlösung läßt man innerhalb von 15 - 30 Minuten zu der Dispersion von 19,5 g N-(3,4-Dimethoxyphenyl)-acetamid in 345 ml Wasser/l g Tensid (100-%-ig)/l g Amidosulfonsäure unter gleichzeitiger Zugabe von 380 g Eis zutropfen. Man läßt noch 4 Stunden bei 10°C nachrühren und saugt dann ab, wäscht neutral und trocknet. Man erhält etwa 35 g des grünen Azofarbstoffs der Formel

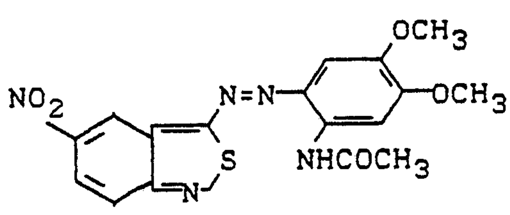

($\lambda_{max}$: 564 nm)

In analoger Weise werden die folgenden Farbstoffe hergestellt, wobei der Farbton die Nuance der Polyesterfärbung beschreibt und der $\lambda_{max}$-Wert in DMF gemessen wurde:

2) 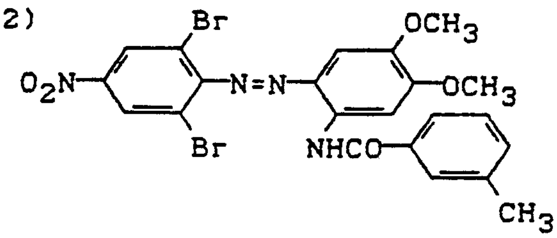 (rotbraun; $\lambda max$: 452 nm)

3) 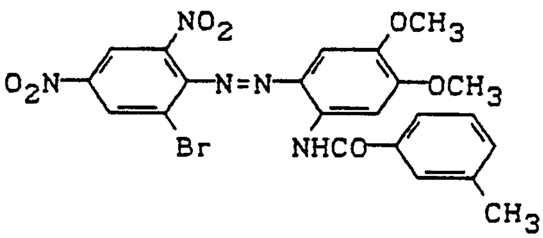 (bordeauxrot; $\lambda_{max}$: 500 nm)

4) 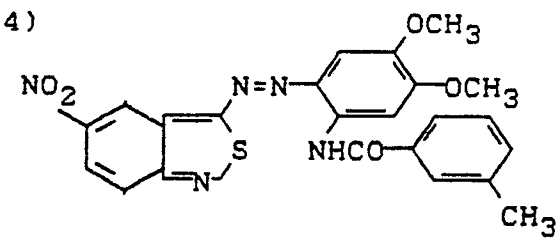 (blauviolett; $\lambda_{max}$: 564 nm)

5) 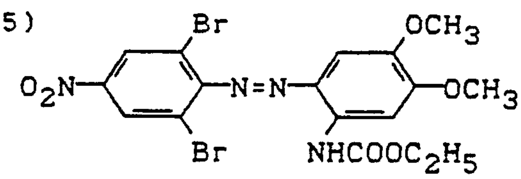 (rotbraun; $\lambda_{max}$: 446 nm)

6) 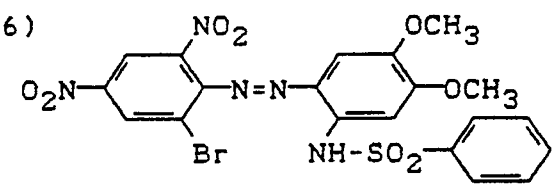 (blaustichig rot; $\lambda_{max}$ = 683 nm)

7) 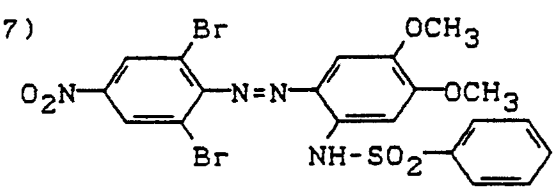 (gelbbraun; $\lambda_{max}$ = 404 nm)

8) 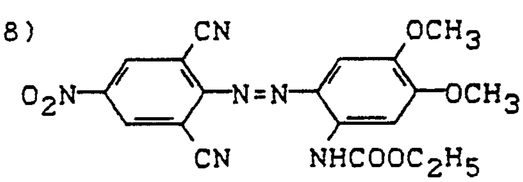 (rotviolett; $\lambda_{max}$: 552 nm)

9) 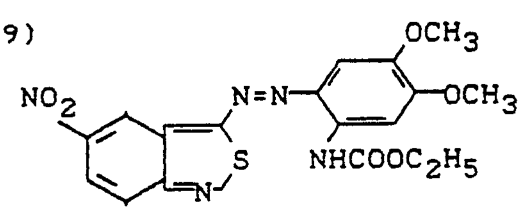 (violett; $\lambda_{max}$: 544 nm)

10) 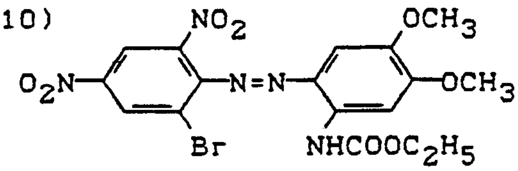

(bordeauxrot; $\lambda_{max}$: 504 nm)

11) 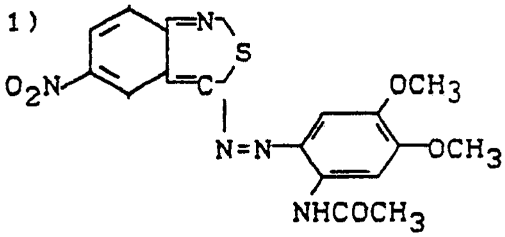

(blauviolett; $\lambda_{max}$: 564 nm)

12) 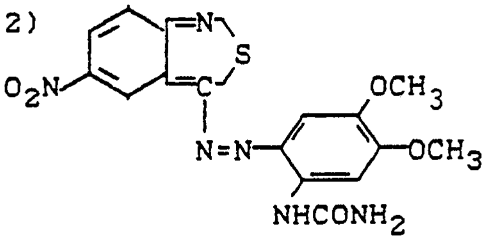

(blauviolett; $\lambda_{max}$: 560 nm)

13) 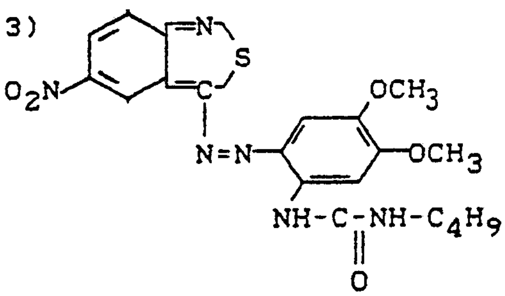

(blauviolett; $\lambda_{max}$: 560 nm)

**Patentansprüche**

1. Azoverbindungen, die frei von ionogenen Gruppen sind, der Formel

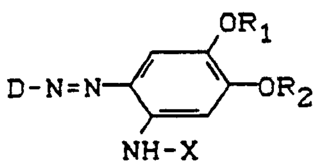 (I)

worin
D für den Rest einer Diazokomponente der Formeln

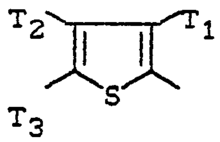 , 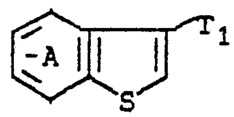 , 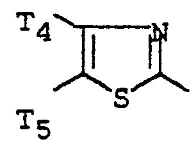 ,

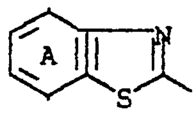 , 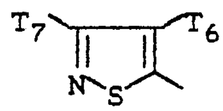 , 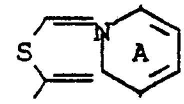

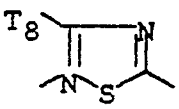 , 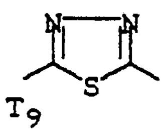 , 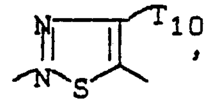 ,

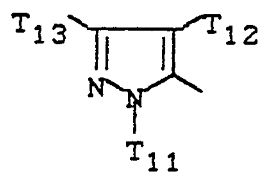 , 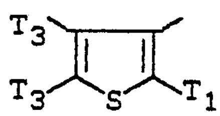 oder 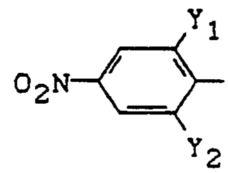

steht, in welchen

| | |
|---|---|
| X | einen Acylrest der Formeln $-COR_1$, $-COOR_1$, $-CONH_2$, $-CONHR_1$, $-CONR_1R_2$, $-COH$ und $-COR_3$ bedeutet, |
| $Y_1$ | F, Cl, Br, J, $NO_2$, CN oder $OR_1$, |
| $Y_2$ | $Y_1$ oder $CF_3$, $SO_2R'_1$, $CO_2R_1$, $COR_1$ oder $OR_1$, |
| $R_1$ und $R_2$ | einen Alkyl- oder Aralkylrest oder - gemeinsam - eine Alkylengruppe |
| $R_3$ | einen Arylrest, |
| $T_1$ | = $NO_2$, CN oder $COOR_1$, |
| $T_2$ | = H oder $CH_3$, |
| $T_3$ | = $NO_2$, CN, $COOR_1$, $COR_1$, $COR_3$, $SO_2R_1$, $SO_2R_3$ oder Phenylazo, |
| $T_2 + T_3$ | = $-CH_2CH_2CH_2CH_2-$ oder $-CH_2CH_2CH_2-$, |
| $T_4$ | = H, $CH_3$ oder Phenyl, |
| $T_5$ | = $NO_2$, $COOR_1$, CN oder Phenylazo, |
| $T_6$ | = Br, $NO_2$ oder CN, |
| $T_7$ | = H, $R_1$, $R_3$ oder $SO_2R_1/R_3$, |
| $T_8$ | = Cl, Br, CN, Phenyl, $CH_3$ oder $SR_1$, |
| $T_9$ | = Cl, Br, $CF_3$, $SO_2R_1/R_3$ oder $SR_1$, |
| $T_{10}$ | = H, $R_1$, $R_3$, Cl, Br oder $COOR_1$, |
| $T_{11}$ | = H oder $R_1$, |
| $T_{12}$ | = $NO_2$, CN, Cl, Br, $COOR_1$ und |
| $T_{13}$ | = H, CN oder $R_1$, |

bedeuten, wobei die obengenannten Alkylreste solche mit 1 - 6 C-Atomen, die gegebenenfalls durch OH oder $C_1$-$C_4$-Alkoxy substituiert sein können, die Arylreste Phenylreste, die durch $CF_3$, Halogen, $C_1$-$C_4$-Alkyl oder $C_1$-$C_4$-Alkoxy substituiert sein können, die Aralkylreste Phenyl-$C_1$-$C_3$-alkylreste, die wie vorstehend im Phenylrest substituiert sein können, und die Alkylengruppen $-CH_2-$ oder $CH_2CH_2-$ sind;

vorzugsweise stehen $R_1$ und $R_2$ für $C_1$-$C_4$-Alkyl.

2. Azoverbindung der Formel

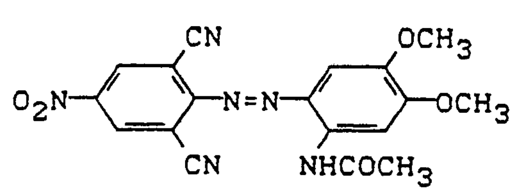

3. Azoverbindung der Formel

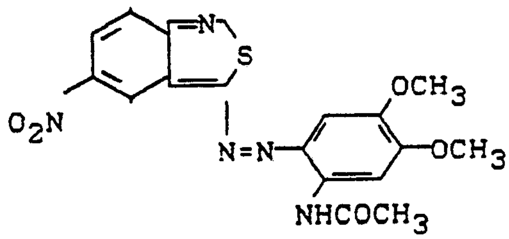

25

4. Verfahren zur Herstellung von Azoverbindungen gemäß Anspruch 1, dadurch gekennzeichnet, daß man in üblicher Weise Amine der Formel

$D-NH_2$

diazotiert und auf Verbindungen der Formel

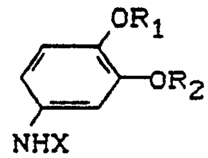

kuppelt
oder Hydrazine der Formel

$D-NH-NH_2$

oxidativ auf die vorstehend genannten Verbindungen kuppelt.

5. Verfahren zum Färben und Bedrucken von Polyesterfasern, dadurch gekennzeichnet, daß man Verbindungen der Ansprüche 1 - 3 verwendet.

**Claims**

1. Azo compounds which are free of ionic groups and have the formula

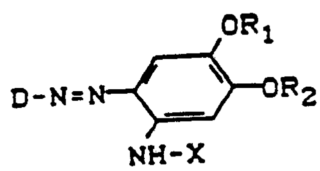

(I)

where
D stands for the radical of a diazo component of the formulae

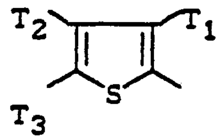 , 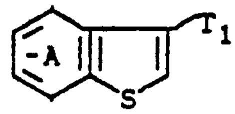 , 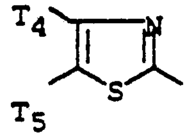 ,

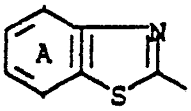 , 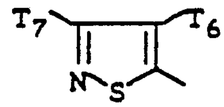 , 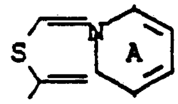

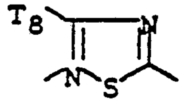 , 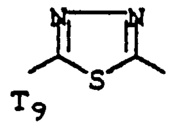 , 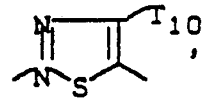 ,

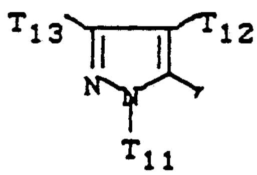 , 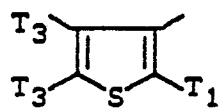 or 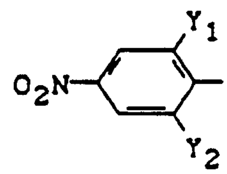

in which

| | |
|---|---|
| X | denotes an acyl radical of the formulae $-COR_1$, $-COOR_1$, $-CONH_2$, $-CONHR_1$, $-CONR_1R_2$, $-COH$ and $-COR_3$, |
| $Y_1$ | denotes F, Cl, Br, I, $NO_2$, CN or $OR_1$, |
| $Y_2$ | denotes $Y_1$ or $CF_3$, $SO_2R'_1$, $CO_2R_1$, $COR_1$ or $OR_1$, |
| $R_1$ and $R_2$ | denote an alkyl or aralkyl radical or - together - an alkylene group |
| $R_3$ | denotes an aryl radical, |
| $T_1$ | = $NO_2$, CN or $COOR_1$, |
| $T_2$ | = H or $CH_3$, |
| $T_3$ | = $NO_2$, CN, $COOR_1$, $COR_1$, $COR_3$, $SO_2R_1$, $SO_2R_3$ or phenylazo, |
| $T_2$ + $T_3$ | = $-CH_2CH_2CH_2CH_2-$ or $-CH_2CH_2CH_2-$, |
| $T_4$ | = H, $CH_3$ or phenyl, |
| $T_5$ | = $NO_2$, $COOR_1$, CN or phenylazo, |
| $T_6$ | = Br, $NO_2$ or CN, |
| $T_7$ | = H, $R_1$, $R_3$ or $SO_2R_1/R_3$, |
| $T_8$ | = Cl, Br, CN, phenyl, $CH_3$ or $SR_1$ |
| $T_9$ | = Cl, Br, $CF_3$, $SO_2R_1/R_3$ or $SR_1$, |
| $T_{10}$ | = H, $R_1$, $R_3$, Cl, Br or $COOR_1$, |
| $T_{11}$ | = H or $R_1$, |
| $T_{12}$ | = $NO_2$, CN, Cl, Br, $COOR_1$ and |
| $T_{13}$ | = H, CN or $R_1$, |

where the abovementioned alkyl radicals are those having 1 - 6 C atoms, which can be optionally substituted by OH or $C_1$-$C_4$-alkoxy, the aryl radicals are phenyl radicals which can be substituted by $CF_3$, halogen, $C_1$-$C_4$-alkyl or $C_1$-$C_4$-alkoxy, the aralkyl radicals are phenyl-$C_1$-$C_3$-alkyl radicals which can be substituted in the phenyl radical as indicated above, and the alkylene groups are $-CH_2-$ or $CH_2CH_2-$;

$R_1$ and $R_2$ preferably stand for $C_1$-$C_4$-alkyl.

2. Azo compound of the formula

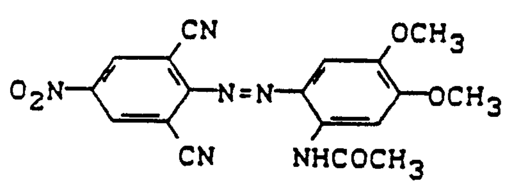

3. Azo compound of the formula

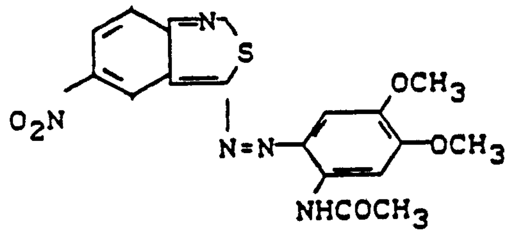

4. Process for preparing azo compounds according to Claim 1, characterized in that, in conventional manner, amines of the formula

$D\text{-}NH_2$

are diazotized and coupled onto compounds of the formula

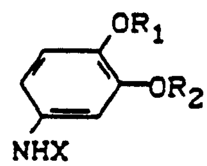

or
hydrazines of the formula

$D\text{-}NH\text{-}NH_2$

are oxidatively coupled onto the aforementioned compounds.

5. Process for dyeing and printing polyester fibres, characterized in that compounds of Claims 1 - 3 are used.

**Revendications**

1. Composés azoïques, qui sont dépourvus de groupes ionogènes, de formule

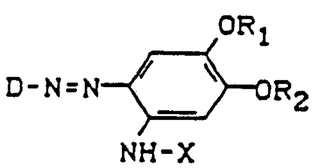

(I)

dans laquelle
D représente le reste d'un composant diazotable de formules

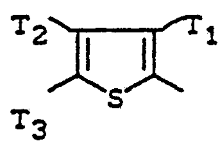 , 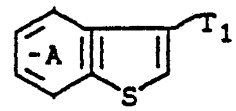 , 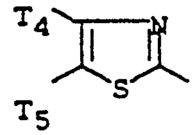 ,

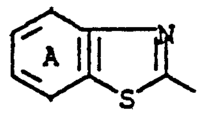 , 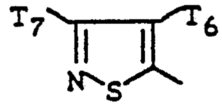 , 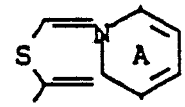

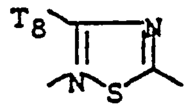 , 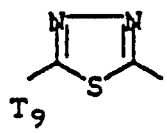 , 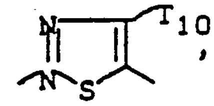 ,

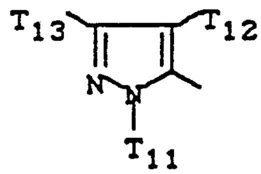 , 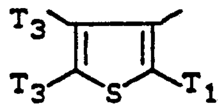 ou 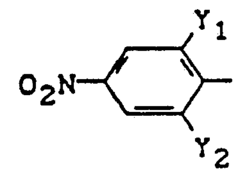 .

dans lesquelles

X représente un reste acyle de formules $-COR_1$, $-COOR_1$, $-CONH_2$, $-CONHR_1$, $-CONR_1R_2$, $-COH$ et $-COR_3$,
$Y_1$ représente F, Cl, Br, I, $NO_2$, CN ou $OR_1$,
$Y_2$ représente $Y_1$ ou $CF_3$, $SO_2R'_1$, $CO_2R_1$, $COR_1$ ou $OR_1$,
$R_1$ et $R_2$ représentent un reste alkyle ou aralkyle ou forment conjointement un groupe alkylène,
$R_3$ est un reste aryle,
$T_1$ = $NO_2$, CN ou $COOR_1$,
$T_2$ = H ou $CH_3$,
$T_3$ = $NO_2$, CN, $COOR_1$, $COR_1$, $COR_3$, $SO_2R_1$, $SO_2R_3$ ou phénylazo,
$T_2 + T_3$ = $-CH_2CH_2CH_2CH_2-$ ou $-CH_2CH_2CH_2-$
$T_4$ = H, $CH_3$ ou phényle,
$T_5$ = $NO_2$, $COOR_1$, CN ou phénylazo,
$T_6$ = Br, $NO_2$ ou CN,
$T_7$ = H, $R_1$, $R_3$ ou $SO_2R_1/R_3$,
$T_8$ = Cl, Br, CN, phényle, $CH_3$ ou $SR_1$,
$T_9$ = Cl, Br, $CF_3$, $SO_2R_1/R_3$ ou $SR_1$,
$T_{10}$ = H, $R_1$, $R_3$, Cl, Br ou $COOR_1$,
$T_{11}$ = H ou $R_1$,
$T_{12}$ = $NO_2$, CN, Cl, Br, $COOR_1$ et
$T_{13}$ = H, CN ou $R_1$,

les restes alkyle mentionnés ci-dessus étant des restes de 1 à 6 atomes de carbone qui peuvent être substitués le cas échéant par des groupes OH ou alkoxy en $C_1$ à $C_4$, les restes aryle sont des restes phényle qui peuvent être substitués par des radicaux $CF_3$, halogéno, alkyle en $C_1$ à $C_4$ ou alkoxy en $C_1$ à $C_4$, les restes aralkyle sont des restes phényl-(alkyle en $C_1$ à $C_3$) qui peuvent être substitués dans le reste phényle comme indiqué ci-dessus et les groupes alkylène sont des groupes $-CH_2-$ ou $CH_2CH_2-$ ;

$R_1$ et $R_2$ représentant de préférence un groupe alkyle en $C_1$ à $C_4$.

2. Composé azoïque de formule

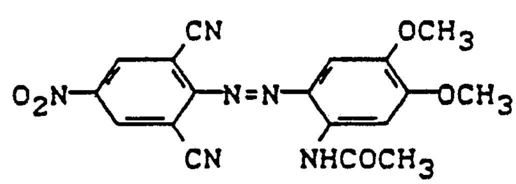

3. Composé azoïque de formule

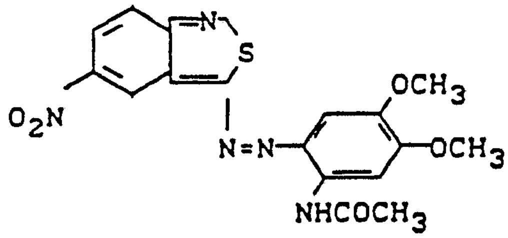

4. Procédé de préparation de composés azoïques suivant la revendication 1, caractérisé en ce qu'on diazote de manière classique des amines de formule

$D-NH_2$

et on les fait copuler sur des composés de formule

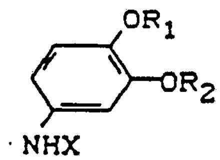

ou bien
on fait copuler des hydrazines de formule

$D-NH-NH_2$

par voie d'oxydation sur les composés mentionnés ci-dessus.

5. Procédé de teinture et d'impression de fibres de polyester, caractérisé en ce qu'on utilise des composés suivant les revendications 1 à 3.